(19) Europäisches Patentamt
European Patent Office
Office européen des brevets

(11) Veröffentlichungsnummer: **0 035 094**
**B1**

(12) # EUROPÄISCHE PATENTSCHRIFT

(45) Veröffentlichungstag der Patentschrift: **11.04.84**

(51) Int. Cl.³: **C 08 K 9/10**, C 08 L 75/04

(21) Anmeldenummer: **81100112.2**

(22) Anmeldetag: **09.01.81**

(54) **Teilchenförmiges Mittel zur Verhinderung der Brennbarkeit von brennbaren Stoffen.**

(30) Priorität: **13.02.80 DE 3005252**

(43) Veröffentlichungstag der Anmeldung: **09.09.81 Patentblatt 81/36**

(45) Bekanntmachung des Hinweises auf die Patenterteilung: **11.04.84 Patentblatt 84/15**

(84) Benannte Vertragsstaaten: **AT BE CH DE FR GB IT LI NL SE**

(56) Entgegenhaltungen:
**US-A- 3 423 343**
**US-A- 4 097 400**

(73) Patentinhaber: **HOECHST AKTIENGESELLSCHAFT**
**Postfach 80 03 20**
**D-6230 Frankfurt am Main 80 (DE)**

(72) Erfinder: **Staendeke, Horst, Dr.**
**von-Meer-Strasse 15**
**D-5042 Erftstadt (DE)**
Erfinder: **Dany, Franz-Josef, Dr.**
**Heddinghovener-Strasse 47**
**D-5042 Erftstadt (DE)**
Erfinder: **Kandler, Joachim, Dr.**
**Amselweg 10**
**D-5042 Erftstadt (DE)**

**EP 0 035 094 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Teilchenförmiges Mittel zur Verhinderung der Brennbarkeit von brennbaren Stoffen

Gegenstand der Erfindung ist ein teilchenförmiges Mittel auf der Basis von freifließenden, pulverförmigen Ammoniumpolyphosphaten zur Verhinderung der Brennbarkeit von brennbaren Stoffen.

Es ist generell bekannt, Ammoniumpolyphosphate als Flammschutzmittel für Kunststoffe zu verwenden. Beispielsweise beschreibt die Deutsche Auslegeschrift 12 83 532 ein Verfahren zur Herstellung von flammwidrigen Polyurethanen aus hochmolekularen Polyhydroxylverbindungen, Polyisocyanaten und Katalysatoren, wobei ein Ammoniumpolyphosphat der allgemeinen Formel

$$H_{(n-m)+2}(NH_4)_mP_nO_{3n+1}$$

in der n eine ganze Zahl mit einem über 10 liegenden Durchschnittswert ist, m eine ganze Zahl bis maximal $n+2$ bedeutet und m/n zwischen etwa 0,7 und 1,1 liegt, als Flammschutzmittelzusatz vorgeschlagen wird.

Obgleich Ammoniumpolyphosphate der vorgenannten allgemeinen Formel beim Einsatz in Polyurethanen letzteren einen guten Flammschutz verleihen, sind sie mit dem Nachteil behaftet, daß sie nicht ausreichend wasserunlöslich sind und deshalb im Laufe der Zeit durch Witterungseinflüsse aus dem Kunststoff ausgewaschen werden.

Wie aus Spalte 3 der DE-AS 12 83 532 ersichtlich, besitzen die dort als praktisch wasserunlöslich bezeichneten Ammoniumpolyphosphate dennoch eine beachtliche Löslichkeit in Wasser, indem beim Aufschlämmen von 10 g des Ammoniumpolyphosphats in 100 $m^3$ Wasser bei 25 °C bis zu 5 g des Ammoniumpolyphosphates gelöst werden. d. h. daß die löslichen Anteile des Ammoniumpolyphosphates bis zu 50 % der eingesetzten Menge betragen.

Bei der Herstellung selbstverlöschender, nachgiebiger Polyurethanschäume, beispielsweise nach dem Verfahren der DE-AS 23 13 819, durch Polykondensation eines Trimethylolpropan eingebaut enthaltenden Polyester-Polyols mit einem organischen Polyisocyanat in Gegenwart von mindestens 10 Gewichtsteilen Ammoniumpolyphosphat, bezogen auf 100 Gewichtsteile des Polyols, bereitet die Homogenisierung des Ausgangsgemisches aufgrund dessen Viskosität besondere Schwierigkeiten. In Gegenwart von 30 Gew% Ammoniumpolyphosphat mit einem Kondensationsgrad n von etwa 700 beträgt nämlich die Viskosität des Ansatzes etwa 70 000 mPa.s, so daß das Rühren oder Kneten des Ansatzes problematisch ist. Diese hohe Viskosität ist durch den Zusatz des Ammoniumpolyphosphates bedingt, das bekanntlich in Gegenwart von Wasser unter Bildung eines Gels aufquillt. Dieser Gel-Effekt wird dann zum Nachteil, wenn die Polyolkomponente des Ansatzes bereits viskos ist. So beträgt beispielsweise die Viskosität eines in der Praxis eingesetzten Polyesterpolyols auf der Basis von Adipinsäure, Diethylenglykol und einem Triol bei 25 °C über 20 000 mPa.s. In diesem Falle war man bisher genötigt, ein nichtquellendes Ammoniumpolyphosphat mit niedrigem Kondensationsgrad von $n < 400$ zu verwenden, das jedoch eine höhere Wasserlöslichkeit besitzt als die hochkondensierten Phosphate und dadurch aus dem Schaumstoff bei Bewitterung teilweise ausgewaschen wird.

Es bestand somit die Aufgabe, Mittel und Wege zur Verminderung der Löslichkeit von Ammoniumpolyphosphaten in Wasser zu finden, so daß die Gefahr des Auswaschens des Ammoniumpolyphosphates beim Einsatz als Flammschutzmittel in Kunststoffen durch Witterungseinflüsse möglichst weitgehend vermieden wird. Weiterhin soll der Zusatz des Ammoniumpolyphosphates in bereits viskose Polyesterpolyole die Viskosität des Ansatzes nicht zusätzlich erhöhen.

Vorstehende Forderungen werden von dem Mittel der Erfindung erfüllt.

Gegenstand der Erfindung ist ein teilchenförmiges Mittel auf der Basis von freifließenden, pulverförmigen Ammoniumpolyphosphaten der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, zur Verhinderung der Brennbarkeit von brennbaren Stoffen, welches dadurch gekennzeichnet ist, daß es aus

a) etwa 75 bis 99,9 Gew% Ammoniumpolyphosphat und

b) etwa 0,1 bis 25 Gew% eines gehärteten, wasserunlöslichen Phenolharzes (Phenol/Formaldehyd-Harzes), welches die einzelnen Ammoniumpolyphosphatteilchen umhüllt,

besteht.

Das Mittel der Erfindung besitzt im allgemeinen eine mittlere Teilchengröße von etwa 0,01 bis 0,05 mm und der Kondensationsgrad n des Ammoniumpolyphosphates ist vorzugsweise eine ganze Zahl mit einem Durchschnittswert von 450 bis 800, bestimmt nach dem Endgruppen-Titrations-Verfahren (von Wazer), Griffiter und McCullough, Anal. Chem. 26, Seite 1755 (1954).

Entsprechend einer weiteren bevorzugten Ausführungsform des erfindungsgemäßen Mittels beträgt der Anteil des Phenolharzes (Phenol/Formaldehyd-Harzes) etwa 0,1 bis 10 Gew%.

Als Phenolharz ist vornehmlich ein alkohollösliches, härtbares, nichtplastifiziertes Phenolharz (Phenol/Formaldehyd-Harz) oder ein wärmehärtbares Phenolresol geeignet.

Schließlich betrifft die Erfindung auch die Verwendung des vorbeschriebenen Mittels zum Flammfestmachen von Polyurethanen bzw. Polyurethanschäumen, wobei der Gehalt des Mittels im Polyurethanschaum etwa 5 bis 50 Gew%, bezogen auf die Menge der alkoholischen Komponente des Polyurethans, beträgt.

Das Aufbringen der Phenolharze auf die Ammoniumpolyphosphat-Teilchen kann entweder in einer alkoholischen Harzlösung durch Aushärten des Harzes unter Rühren der Ammoniumpolyphosphat/Harz-Suspension oder durch Verdampfen des Lösungsmittels der Suspension in einem beheizten Kneter mit nachfolgender Hitzehärtung oder durch Sprühtrocknung der Suspension erfolgen.

Durch die erfindungsgemäße Umhüllung der Ammoniumpolyphosphat-Teilchen mit einem gehärteten Phenolharz (Phenol/Formaldehyd-Harz) wird die Löslichkeit des Ammoniumpolyphosphates in Wasser erheblich herabgesetzt, was sich günstig auswirkt beim Einsatz eines derartig vorbehandelten Ammoniumpolyphosphates als Flammschutzmittel in Polyurethanschäumen.

Darüberhinaus beeinflußt der Zusatz des erfindungsgemäßen Mittels zu dem Ausgangsgemisch für die Polyurethanschaumbildung zum Zwecke des Flammschutzes nicht dessen Viskosität im Sinne einer Viskositätserhöhung, so daß derartige Ausgangsgemische ohne Schwierigkeiten verarbeitet werden können.

Die Eigenschaften und Vorteile des erfindungsgemäßen Mittels werden in den nachfolgenden Beispielen erläutert. Zur Durchführung der in den Beispielen dargelegten Versuche wurden ein im Handel erhältliches Ammoniumpolyphosphat sowie verschiedene, ebenfalls handelsübliche Phenolharze eingesetzt. Im einzelnen handelt es sich hierbei um folgende Produkte :

1. ®Exolit 263, Hoechst AG, Frankfurt/Main Es handelt sich um ein feinkörniges, in Wasser schwer lösliches Ammoniumpolyphosphat der Formel $(NH_4PO_3)_n$, wobei $n \sim 700$ ist.

2. ®Phenodur PR 101, Hoechst AG, Frankfurt/Main Wärmehärtbares Phenolresol ; dynamische Viskosität bei 20 °C 150-250 mPa.s ; Dichte bei 20 °C 1,167 g/ml.

3. ®Phenodur PR 121, Hoechst AG, Frankfurt/Main Flüssiges, wärmehärtbares Phenolresol, dynamische Viskosität bei 20 °C 150-250 mPa.s ; Dichte bei 20 °C, 1,219 g/ml.

4. ®Phenodur PR 373, Hoechst AG, Frankfurt/Main Alkohollösliches, härtbares, nichtplastifiziertes Phenolharz ; dynamische Viskosität bei 20 °C 50-70 mPa.s ; Dichte bei 20 °C 1,26 g/ml.

5. ®Phenodur PR 285, Hoechst AG, Frankfurt/Main Härtbares, nichtplastifiziertes Phenolharz ; dynamische Viskosität einer 55 %igen Lösung in Isobutanol bei 20 °C 90-140 mPa.s ; Dichte der Lösung bei 20 °C 0,99 g/ml.

6. ®Desmophen 2200, Bayer AG, Leverkusen Wenig verzweigter Polyester auf der Basis von Adipinsäure, Diethylenglykol und einem Triol ; Hydroxylzahl 60 ; Viskosität bei 75 °C 1 000 mPa.s ; Dichte bei 20 °C 1,13 g/ml ; Wassergehalt $< 0,1$ %.

®Desmophen 2200 dient zur Herstellung von Polyurethanschaumstoff auf Polyesterbasis.

### Beispiel 1

In einem beheizten Laborkneter wurden 200 g ®Exolit 263 auf 100 °C erwärmt und im Verlauf von 15 min mit einer Lösung von 30,8 g ®Phenodur PR 101 in 70 ml Methanol versetzt. Anschließend wurde das Gemisch 2 Stunden bei 100-105 °C unter Verdampfen des Methanols geknetet, so daß ein trockenes Produkt erhalten wurde. Die mittlere Teilchengröße des Produktes betrug 0,04 mm. Es wurden 210,5 g des Produktes erhalten, wobei der Phenol/Formaldehyd-Harzanteil 9,5 Gew% betrug.

Zur Bestimmung des Einflusses vorgenanntes Produktes auf die Viskosität von ®Desmophen 2200 wurden 30 g des Produktes in 70 g ®Desmophen 2200 eingerührt und ca. 1 Std. bei 25 °C temperiert. Anschließend erfolgte die Viskositätsmessung des Gemisches mit dem Brookfield-Viskosimeter RVT, Spindel C bei 5 Umdrehungen pro Minute. Das Ergebnis ist in der Tabelle dargestellt.

Zur Bestimmung der wasserlöslichen Anteile wurden 10 g des hergestellten Produktes in 100 ml Wasser suspendiert und die Suspension 20 min bei 25 °C gerührt. Anschließend wurde der im Wasser ungelöste Anteil des Produktes innerhalb von 40 Minuten durch Zentrifugieren sedimentiert. Von der überstehenden klaren Lösung wurden 5,0 ml in eine zuvor gewogene Aluminiumschale pipettiert und bei 120 °C im Trockenschrank eingedampft. Aus der Menge des Verdampfungsrückstandes wurde der wasserlösliche Anteil berechnet. Das Ergebnis ist in der Tabelle dargestellt.

### Beispiel 2

Es wurde analog Beispiel 1 verfahren , wobei jedoch eine Lösung von 30,8 g ®Phenodur PR 121 in 70 ml Methanol eingegesetzt wurde. Es wurden 211 g des hergestellten Produktes erhalten, wobei der Phenol/Formaldehyd-Harzanteil 9,5 Gew% betrug. Die ermittelten Werte für die Viskosität und die wasserlöslichen Anteile analog Beispiel 1 sind in der Tabelle aufgeführt.

### Beispiel 3

Es wurde analog Beispiel 1 verfahren, wobei jedoch eine Lösung von 29,4 g ®Phenodur PR 271 in 70 ml Methanol eingesetzt wurde. Die Produktausbeute betrug 212,5 g. Der Phenol/Formaldehyd-Harzanteil betrug 9,4 Gew%.

Die Werte für die Viskosität und die wasserlöslichen Anteile entsprechend Beispiel 1 sind in der Tabelle aufgeführt.

Beispiel 4

Es wurde analog Beispiel 1 verfahren, wobei jedoch eine Lösung von 20,0 g ®Phenodur PR 373 in 100 ml Methanol eingesetzt wurde. Die Produktausbeute betrug 214 g. Der Phenol/Formaldehyd-Harzanteil betrug 9,4 Gew%.

Die Werte für die Viskosität und die wasserlöslichen Anteile entsprechend Beispiel 1 sind in der Tabelle aufgeführt.

Beispiel 5

Es wurde analog Beispiel 1 verfahren, wobei jedoch eine Lösung von 36,4 g ®Phenodur PR 285 in 70 ml Methanol eingesetzt wurde. Die Produktausbeute betrug 215 g. Der Phenol/Formaldehyd-Harzanteil betrug 9,3 Gew%.

Die Werte für die Viskosität und die wasserlöslichen Anteile entsprechend Beispiel 1 sind in der Tabelle aufgeführt.

Beispiel 6

Es wurde analog Beispiel 1 verfahren, wobei jedoch eine Lösung von 18,2 g ®Phenodur PR 285 in 35 ml Methanol eingesetzt wurde. Die Produktausbeute betrug 209 g. Der Phenol/Formaldehyd-Harzanteil betrug 4,8 Gew%.

Die Werte für die Viskosität und die wasserlöslichen Anteile entsprechend Beispiel 1 sind in der Tabelle aufgeführt.

Beispiel 7

Es wurde analog Beispiel 1 verfahren, wobei jedoch eine Lösung von 9,1 g ®Phenodur PR 285 in 20 ml Methanol eingesetzt wurde. Die Produktausbeute betrug 212,5 g. Der Phenol/Formaldehyd-Harzanteil betrug 2,5 Gew%.

Die Werte für die Viskosität und die wasserlöslichen Anteile entsprechend Beispiel 1 sind in der Tabelle aufgeführt.

Beispiel 8

Es wurde analog Beispiel 1 verfahren, wobei jedoch eine Lösung von 4,55 g ®Phenodur PR 285 in 10 ml Methanol eingesetzt wurde. Die Produktausbeute betrug 200 g. Der Phenol/Formaldehyd-Harzanteil betrug 1,3 Gew%.

Die Werte für die Viskosität und die wasserlöslichen Anteile entsprechend Beispiel 1 sind in der Tabelle aufgeführt.

Beispiel 9

Es wurde analog Beispiel 1 verfahren, wobei jedoch eine Lösung von 1,8 g ®Phenodur PR 285 in 10 ml Methanol eingesetzt wurde. Die Produktausbeute betrug 196 g. Der Phenol/Formaldehyd-Harzanteil betrug 0,5 Gew%.

Die Werte für die Viskosität und die wasserlöslichen Anteile entsprechend Beispiel 1 sind in der Tabelle aufgeführt.

Beispiel 10

Es wurde analog Beispiel 1 verfahren, wobei jedoch eine Lösung von 0,4 g ®Phenodur PR 285 in 10 ml Methanol eingesetzt wurde. Die Produktausbeute betrug 197 g. Der Phenol/Formaldehyd-Harzanteil betrug 0,1 Gew%.

Die Werte für die Viskosität und die wasserlöslichen Anteile entsprechend Beispiel 1 sind in der Tabelle aufgeführt.

Beispiel 11 (Vergleichsbeispiel)

Es wurde analog Beispiel 1 verfahren, wobei jedoch kein Phenol/Formaldehyd-Harz zugesetzt wurde.

Tabelle

| Beispiel | Phenol/Formaldehyd-Harz | | Viskosität | | wasserlösliche Anteile | |
|---|---|---|---|---|---|---|
| | Typ: Phenodur | Konzentration (Gew%) | (mPa . s) | Veränderung (%) | (Gew%) | Veränderung (%) |
| 1 | PR 101 | 9,5 % | 60 000 | - 14 | 5,9 | - 73 |
| 2 | PR 121 | 9,5 % | 60 000 | - 14 | 7,4 | - 66 |
| 3 | PR 271 | 9,4 % | 58 000 | - 17 | 7,5 | - 66 |
| 4 | PR 373 | 9,4 % | 70 000 | ± 0 | 9,4 | - 57 |
| 5 | PR 285 | 9,3 % | 48 000 | - 31 | 9,8 | - 55 |
| 6 | PR 285 | 4,8 % | 47 000 | - 33 | 16 | - 27 |
| 7 | PR 285 | 2,5 % | 44 000 | - 37 | 18 | - 18 |
| 8 | PR 285 | 1,3 % | 45 000 | - 36 | 18 | - 18 |
| 9 | PR 285 | 0,5 % | 49 000 | - 30 | 20 | - 9 |
| 10 | PR 285 | 0,1 % | 51 000 | - 27 | 20 | - 9 |
| 11 | - | - | 70 000 | - | 22 | - |

Die Tabellenwerte zeigen, daß mit Hilfe des erfindungsgemäßen Phenolharzes (Phenol/Formaldehyd-Harzes) unter Einsatz preiswerter Produkte eine deutliche Verbesserung des Viskositätsverhaltens erreicht werden kann. Dies gilt insbesondere für den Typ ®Phenodur PR 285, bei dem mit einer Konzentration von 0,5 Gew% ein Viskositätswert für die 30 gewichtsprozentige Ammoniumpolyphosphat/Polyesterpolyol-Suspension von $< 50\,000$ mPa.s eingestellt werden kann.

**Ansprüche**

1. Teilchenförmiges Mittel auf der Basis von freifließenden, pulverförmigen Ammoniumpolyphosphaten der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, zur Verhinderung der Brennbarkeit von brennbaren Stoffen, dadurch gekennzeichnet, daß es aus

a) etwa 75 bis 99,9 Gew% Ammoniumpolyphosphat und

b) etwa 0,1 bis 25 Gew% eines gehärteten, wasserunlöslichen Phenolharzes (Phenol/Formaldehyd-Harzes), welches die einzelnen Ammoniumpolyphosphatteilchen umhüllt,

besteht.

2. Mittel nach Anspruch 1, dadurch gekennzeichnet, daß es eine mittlere Teilchengröße von etwa 0,01 bis 0,05 mm besitzt.

3. Mittel nach Anspruch 1 oder 2, dadurch gekennzeichnet, daß n eine ganze Zahl mit einem Durchschnittswert von 450 bis 800 ist.

4. Mittel nach Anspruch 1-3, dadurch gekennzeichnet, daß der Anteil des Phenolharzes (Phenol/Formaldehyd-Harzes) 0,1 bis 10 Gew% beträgt.

5. Mittel nach Anspruch 1-4, dadurch gekennzeichnet, daß das Phenolharz ein alkohollösliches, härtbares, nichtplastifiziertes Phenolharz (Phenol/Formadehyd-Harz) oder ein wärmehärtbares Phenolresol ist.

6. Verwendung des Mittels nach Anspruch 1-5 zum Flammfestmachen von Polyurethanen bzw. Polyurethanschäumen, wobei der Gehalt des Mittels im Polyurethanschaum etwa 5 bis 50 Gew%, bezogen auf die Menge der alkoholischen Komponente des Polyurethans, beträgt.

**Claims**

1. Particulate agent, for impeding the combustibility of combustible substances, based on free-flowing pulverulent ammonium polyphosphates of the general formula

$$H_{(n-m)+2}(NH_4)_mP_nO_{3n+1}$$

in which n stands for a whole number with an average value of about 20 to 800 and the ratio m/n is about 1, the agent containing :

a) about 75 to 99.9 weight % of ammonium polyphosphate,

and

b) about 0.1 to 25 weight % of a hardened, water-insoluble phenol resin (phenol/formaldehyde-resin), enveloping the individual ammonium polyphosphate particles.

2. Agent as claimed in claim 1, presenting an average particle size of about 0.01 to 0.05 mm.

3. Agent as claimed in claim 1 or 2, wherein n is a whole number with an average value of 450 to 800.

4. Agent as claimed in claims 1 to 3, containing the phenol resin (phenol/formaldehyde-resin) in a proportion of 0.1 to 10 weight %.

5. Agent as claimed in claims 1 to 4, wherein the phenol resin in an alcohol-soluble, hardenable, non-plasticized phenol resin (phenol/formaldehyde-resin) or thermosetting phenol resol.

6. Use of the agent as claimed in claims 1 to 5, for flameproofing polyurethanes or polyurethane foams, the polyurethane foam containing the agent in a proportion of about 5 to 50 weight %, based on the quantity of the alcoholic component of the polyurethane.

**Revendications**

1. Agent en particules à base de polyphosphates d'ammonium pulvérulents fluides de formule générale

$$H_{(n-m)+2}(NH_4)_mP_nO_{3n+1}$$

dans laquelle n est un nombre entier d'une valeur moyenne d'environ 20-800 et le rapport m/n est d'environ 1, pour empêcher la combustibilité de matières combustibles, caractérisé en ce qu'il consiste en

a) environ 75-99,9 % en poids de polyphosphate d'ammonium et

b) environ 0,1-25 % en poids d'une résine phénolique durcie, insoluble dans l'eau (résine phénol-formaldéhyde), enrobant les particules individuelles du polyphosphate d'ammonium.

2. Agent selon la revendication 1, caractérisé en ce qu'il présente une granulométrie moyenne d'environ 0,01-0,5 mm.

3. Agent selon la renvendication 1 ou 2, caractérisé en ce que n est un nombre entier d'une valeur moyenne de 450-800.

4. Agent selon les revendications 1-3, caractérisé en ce que la proportion de la résine phénolique (résine phénol-formaldéhyde) est de 0,1-10 % en poids.

5. Agent selon les revendications 1-4, caractérisé en ce que la résine phénolique est une résine phénolique non plastifiée durcissable, soluble dans l'alcool (résine phénol-formaldéhyde) ou un résole phénolique thermodurcissable.

6. Utilisation de l'agent selon les revendications 1-5 pour l'ignifugeage de polyuréthannes ou de mousses de polyuréthannes, la teneur en agent dans la mousse de polyuréthanne étant égale à environ 5-50 % en poids, par rapport à la quantité du composant alcoolique du polyuréthanne.